# EUROPÄISCHE PATENTANMELDUNG

(11) **EP 1 477 393 A2**
(43) Veröffentlichungstag der Anmeldung: **17.11.2004**
(21) Anmeldenummer: 04011370.6
(22) Anmeldetag: 13.05.2004
(51) Int. Cl.: B62D 25/06, B60H 1/26

(54) **Fahrzeugdach**

(30) Priorität: 15.05.2003 DE 10322092
(71) Anmelder: Webasto AG, 82131 Stockdorf (DE)
(72) Erfinder: Pollak, Martin, 82178 Puchheim (DE)
(74) Vertreter: Bedenbecker, Markus

(57) **Zusammenfassung**

Die Erfindung betrifft ein Fahrzeugdach mit einer Dachplatte (7) aus Kunststoff, die eine Dachfläche zwischen Seitenholmen (4) abdeckt. Zur Erhöhung der Gestaltungs- und Funktionsvielfalt ist vorgesehen, dass die Dachplatte (7) wenigstens eine integral aus dem gleichen Kunststoff geformte Aufwölbung (29) aufweist, wobei in wenigstens eine Aufwölbung (29) wenigstens ein Funktionselement (21, 22) integriert ist.

## Beschreibung

Die Erfindung betrifft ein Fahrzeugdach gemäß dem Oberbegriff des Patentanspruchs 1.

Eine derartiges Fahrzeugdach ist aus der EP 0 076 934 A1 bekannt. Bei diesem wird eine ebene Dachplatte aus Kunststoff auf einen oberen Rahmen aufgesetzt, der von den Seitenholmen, einem vorderen und einem hinteren Querholm gebildet wird, und mit diesem verklebt. Ein derartiges Fahrzeugdach ist zwar kostengünstig herstellbar, erlaubt aber keinerlei Anpassung an das Design des Fahrzeugs. Einrichtungen zur Zwangsentlüftung des Innenraums müssen zusätzlich im Bereich der hinteren Säulen vorgesehen sein.

Ein weiteres Fahrzeugdach aus Kunststoff mit einem in eine Dachöffnung integrierten Schiebedach ist aus der EP 0 086 668 A1 bekannt. Bei dieser muß für die Führung des Schiebedeckels eine zusätzliche Kassette an der Unterseite der Dachplatte angebracht werden. Dies beeinträchtigt zum einen die Kopffreiheit der Insassen und bedeutet zum anderen einen erhöhten baulichen Aufwand.

Aufgabe der Erfindung ist es, ein Fahrzeugdach zu schaffen, das einfach und kostengünstig herstellbar ist, das variabel an das Fahrzeug-Design anpaßbar ist und durch welches ein Zusatznutzen erzielbar ist.

Diese Aufgabe wird durch ein Fahrzeugdach mit den Merkmalen des Anspruchs 1 gelöst. Vorteilhafte Ausgestaltungen der Erfindung sind in den Unteransprüchen angegeben.

Dadurch, dass in wenigstens eine in die Dachplatte integrierte Aufwölbung ein zusätzliches Funktionselement integriert ist, kann zum einen das Design des Fahrzeugdachs durch Anzahl und Form der Aufwölbungen beeinflußt werden und zum anderen das Funktionselement, wie beispielsweise eine Luftaustrittsöffnung, ein Gebläse oder eine dritte Bremsleuchte platzsparend und kostengünstig untergebracht werden.

Die Dachplatte ist vorzugsweise zum überwiegenden Teil transparent ausgebildet. Im Bereich des Funktionselements bzw. der Funktionselemente und in den Verbindungsbereichen an den Rändern ist bevorzugt eine eingefärbte Schicht an der Dachplatte ausgebildet, die die Durchsicht in diesem Bereich zumindest vermindert.

Ein bevorzugtes Funktionselement ist eine Luftaustrittsöffnung, die bevorzugt am rückwärtigen Ende der Aufwölbung angeordnet ist. Durch das Überströmen der Aufwölbung wird die Luft beschleunigt und es entsteht ein Unterdruck, durch den Luft über die Luftaustrittsöffnung aus dem Fahrzeuginnenraum zwangsweise abgesaugt wird. Optional kann die Luft auch zusätzlich mittels eines Gebläses befördert werden, welches ebenfalls in die Aufwölbung integriert ist. Bei niedrigeren Geschwindigkeiten kann durch Drehrichtungsumkehr des Gebläses auch auf eine Förderung von Luft in den Innenraum umgeschaltet werden.

Die Luftaustrittsöffnungen sind bevorzugt mittels eines Schließelements verschließbar oder wenigstens teilweise freigebbar. Als Schließelemente kommen beispielsweise verstellbare Lamellen oder schwenkbare Klappen in Betracht, die bevorzugt mittels eines Motors, in einfacheren Fällen auch von Hand betätigbar sind.

Die Dachplatte mit der integrierten Aufwölbung wird vorzugsweise aus einem Polycarbonat in einem Spritzpräge-Verfahren hergestellt. Eingefärbte Schichten für die Transparenz reduzierende Bereiche können vorzugsweise dabei im Zweikomponentenverfahren direkt mit angeformt werden. Vorteilhafterweise werden auch alle Befestigungspunkte, beispielsweise für die Schließelemente, deren Stellmotore, das Gebläse, das Abdeckglas einer dritten Bremsleuchte oder eine Innenverkleidung bei der Herstellung der Dachplatte unmittelbar mit angeformt.

Nachfolgend wird ein Ausführungsbeispiel des erfindungsgemäßen Fahrzeugdaches unter Bezugnahme auf die Zeichnungen näher erläutert. Es zeigt:
- Fig. 1: eine schematische perspektivische Ansicht eines Fahrzeugdaches von links vorne,
- Fig. 2: eine schematische perspektivische Ansicht einer ersten Ausführungsform einer Dachplatte von links hinten,
- Fig. 3: eine schematische perspektivische Ansicht einer zweiten Ausführungsform einer Dachplatte von links hinten,
- Fig. 4: einen Teilschnitt durch eine Luftaustrittsöffnung mit verstellbaren Lamellen gemäß der Schnittlinie A-A in Fig. 3,
- Fig. 5: eine schematische perspektivische Ansicht einer dritten Ausführungsform einer Dachplatte von links hinten,
- Fig. 6: einen Teilschnitt durch eine Luftaustrittsöffnung mit einer innen liegenden schwenkbaren Klappe, und
- Fig. 7: eine Variante zur Fig. 6 mit einem Gebläse und einer außen liegenden schwenkbaren Klappe.

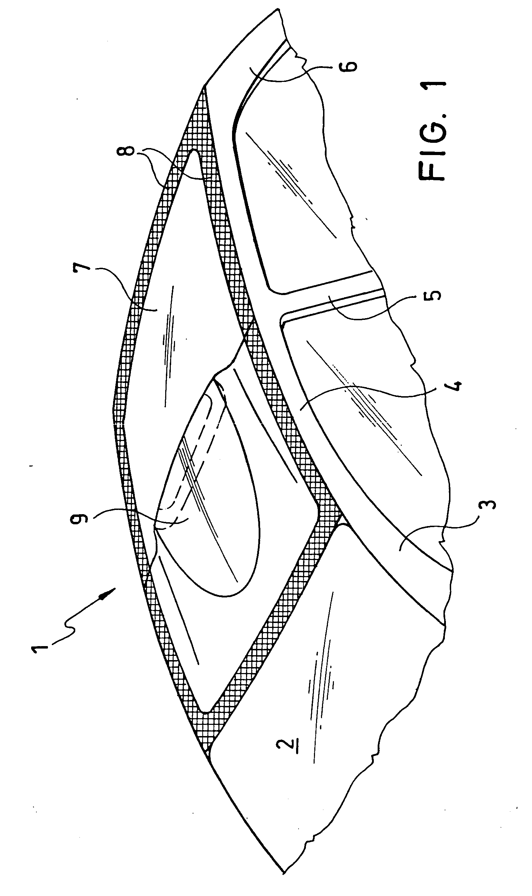

In Fig. 1 ist ein Fahrzeugdach 1 dargestellt, das die gesamte Dachfläche eines Fahrzeugs abgedeckt. Die Vorderkante einer Dachplatte 7 schließt sich dabei unmittelbar an eine Frontscheibe 2 und an Seitenholme 4 an. Oberhalb der Frontscheibe 2, die seitlich von A-Säulen 3 begrenzt wird, ist ein nicht dargestellter Querholm angeordnet, der auch als Windlauf bezeichnet wird. Die Dachplatte 7 legt sich mit ihrer Vorderkante vorzugsweise bündig an die Oberkante der Frontscheibe 2 an und deckt dabei mit einem eingefärbten Randbereich 8 den Windlauf ab. In gleicher Weise kann optional ein Querholm etwa in der Mitte des Fahrzeugdaches vorgesehen sein, der oberhalb von mittleren B-Säulen 5 die Seitenholme 4 verbindet. Ein weiterer nicht dargestellter Querholm verbindet die Seitenholme 4 im Bereich der oberen Enden hinterer C-Säulen 6. Er wird ebenfalls durch den eingefärbten Randbereich 8 der Dachplatte 7 abgedeckt. Die Befestigung der Dachplatte 7 erfolgt vorzugsweise durch Kleben an dafür vorgesehenen Flanschen der Seitenholme 4, des vorderen Windlaufs und des hinteren Querholms. Die Befestigungsbereiche sind bevorzugt durch einen umlaufenden, durch Einfärbung nicht transparenten Randbereich 8 der Dachplatte 7 abgedeckt.

Die Dachplatte 7 ist vorzugsweise in einem Spritzpräge-Verfahren aus einem Polycarbonat hergestellt. Etwa im mittleren Bereich ist dabei eine nach oben vorstehende Aufwölbung 9 unmittelbar aus dem Kunststoffmaterial der Dachplatte 7 ausgeformt. Die Aufwölbung 9 kann angepasst an die Kontur des Fahrzeugs unterschiedliche Formen annehmen. Hierfür sind in den Fign. 1, 2, 3 und 5 mehrerer Ausführungsform gezeigt. Es können auch mehrere Aufwölbungen, beispielsweise in ihrer Form an eine Dachreling angenähert, an der Dachplatte 7 vorgesehen sein. In die Aufwölbungen 9 ist wenigstens ein zusätzliches Funktionselement integriert.

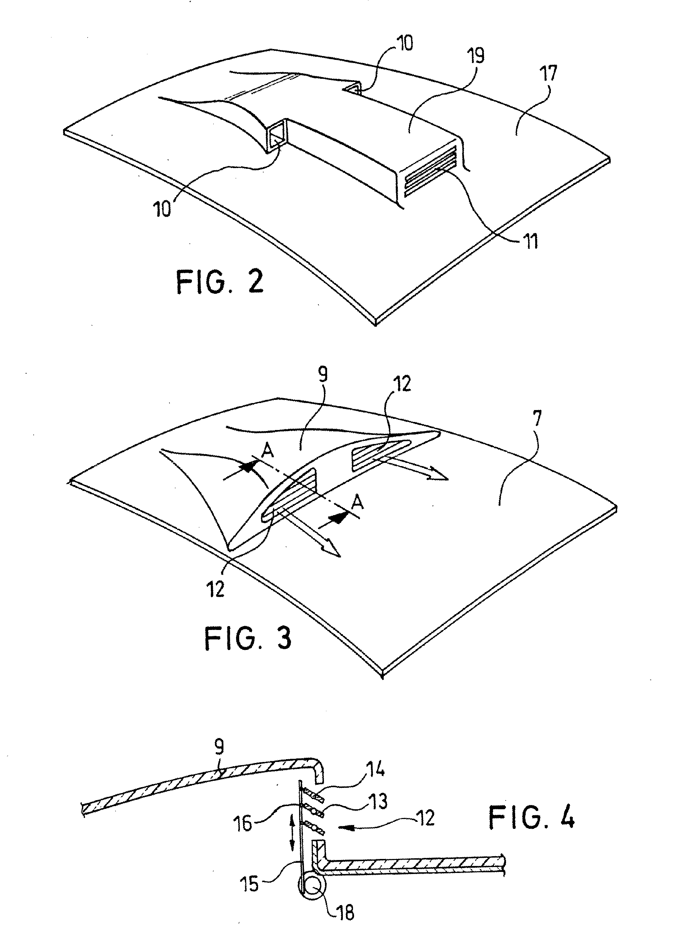

Das zusätzliche Funktionselement wird in Fig. 2 bei einer sich über eine größere Länge einer Dachplatte 17 erstreckenden Aufwölbung 19 durch mehrere Luftaustrittsöffnungen 10 bzw. 11 gebildet. Dabei ist im vorderen Bereich zu beiden Seiten jeweils eine Luftaustrittsöffnung 10 vorgesehen, die zur Entlüftung des Fahrzeuginnenraums im Bereich des Fahrers und des Beifahrers dienen. Der dazwischenliegende mittlere Teil der Aufwölbung 19 ist weiter nach hinten gezogen und weist an der gerade nach unten abfallenden Rückseite Luftaustrittsöffnungen 11 in Form querverlaufender Schlitze auf, die zur Entlüftung des Fahrzeuginnenraums im Bereich der hinteren Passagiere dienen.

Bei der in Fig. 3 dargestellten Ausführungsform hat die Aufwölbung 9 auf der Dachplatte 7 in der Draufsicht in etwa Trapezform. An der nach unten abfallenden Rückseite der Aufwölbung 9 sind zwei in ihrer Form an die Kontur dieser Rückseite im Design angepaßte Luftaustrittsöffnungen 12 angeordnet. Der Schnitt gemäß Fig. 4 durch eine der Luftaustrittsöffnungen 12 zeigt, dass diese durch Verschlußorgane, die in diesem Ausführungsbeispiel von verstellbaren Lamellen 13 gebildet werden, verschließbar oder freigebbar sind. Die Lamellen 13 sind um eine mittlere Drehachse 14 drehbar gelagert und so voneinander beabstandet, daß sie sich in Schließposition, d. h. bei annähernd vertikaler Ausrichtung teilweise überlappen und dichtend aneinander anliegen. Das rückwärtige Ende der Lamellen 13 ist jeweils mittels eines Anlenkpunkts 16 an einem vertikal verschiebbar gelagerten Gestänge 15 angelenkt, das mittels eines Motors 18 so weit verschiebbar ist, daß die Lamellen 13 von einer horizontalen oder leicht nach vorne geneigten Position in ihre vertikale Schließposition schwenkbar sind. Optional kann vor oder hinter den Lamellen 13 noch ein nicht dargestellter Filter vorgesehen sein.

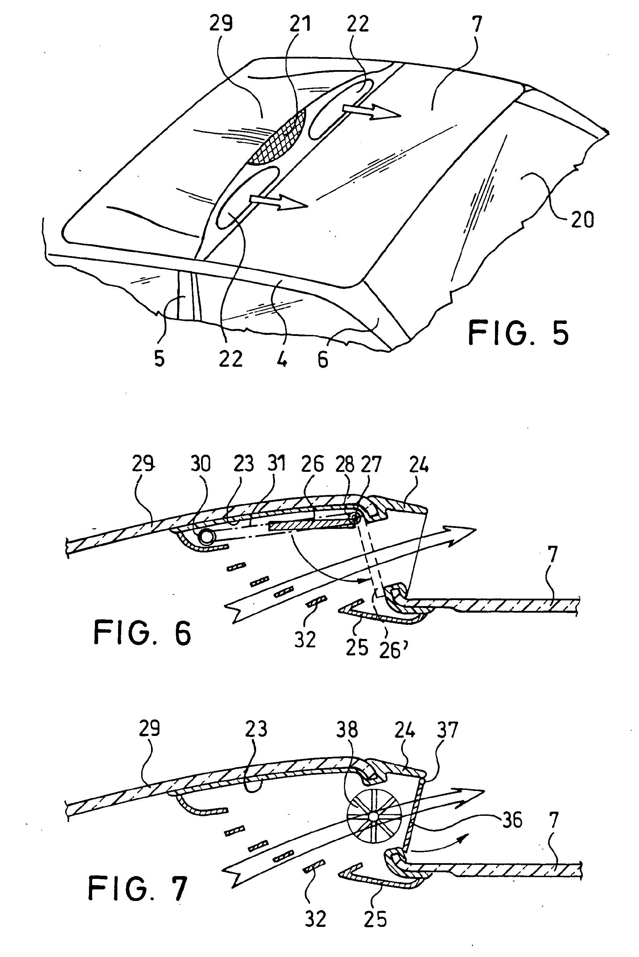

Die Ausführungsform gemäß Fig. 5 zeigt in einer Dachplatte 7 eine Aufwölbung 29, die sich annähernd über die gesamte Breite der Dachplatte 7 erstreckt. In den äußeren Bereichen ist an der rückwärtigen Stirnfläche der Aufwölbung 29 jeweils eine Luftaustrittsöffnung 22 vorgesehen. Zwischen diesen ist eine dritte Bremsleuchte 21 angeordnet, die aufgrund ihrer Anordnung am höchsten Punkt des Fahrzeugs weit nach hinten erkennbar ist und dadurch zu einer erhöhten Sicherheit beiträgt.

In Fig. 6 ist eine Variante zur Fig. 4 dargestellt. Die Luftaustrittsöffnung 22 in der Aufwölbung 29 ist mittels einer schwenkbaren Klappe 26 verschließbar oder freigebbar. Die Klappe 26 ist an einer Schwenkachse 27 gelagert, die unterhalb des hinteren oberen Randes der Aufwölbung 29 angeordnet ist. In ihrer Schließposition 26' liegt die Klappe 26 mit ihrer unteren Kante von innen dichtend an einem aufgewölbten Rand des dahinterliegenden Bereichs der Dachplatte 7 an. In vollständig geöffneten Zustand liegt die Klappe 26 an der Unterseite der Aufwölbung 29 an. Angetrieben wird die Klappe 26 durch einen kleinen elektrischen Motor 30, der ebenfalls im Bereich der Aufwölbung 29 angeordnet ist und mit seinem Antriebsritzel über einen Zahnriemen 31 ein Zahnrad 28 antreibt, das im Bereich der Schwenkachse 27 mit der Klappe 26 verbunden ist.

Der Bereich der schwenkbaren Klappe 26 und des Motors 30 ist an der Innenseite der Aufwölbung 29 durch eine integrierte, mit angespritzte, eingefärbte Schicht 23 nach außen hin unsichtbar abgedeckt. Die hintere Kante der Aufwölbung 29 ist durch eine Abdeckung 24 verlängert, die aus dem Material der Schicht 23 heraus geformt sein kann. Die Abdeckung 24 überdeckt die Luftaustrittsöffnung 22, so daß keine Feuchtigkeit und kein Schmutz in diese hinein gerät. Zusätzlich kann am Austrittsende der Luftaustrittsöffnung 22 noch ein Ausströmgitter oder ein Filter vorgesehen sein. Die Abdeckung 24 kann auch die Form und die Funktion eines Spoilers aufweisen. Zur Innenseite, d. h. zum Innenraum des Fahrzeugs hin ist die Luftaustrittsöffnung mit dem Schwenkmechanismus für die Klappe 26 und dem Motor 30 durch eine Verkleidung 25 abgedeckt, die an der Eintrittseite von einem Gitter 32 gebildet wird.

Bei der Variante gemäß Fig. 7 ist eine Klappe 36 am äußersten Ende der Abdeckung 24 mit einer Schwenkachse 37 befestigt. Die Klappe 36 liegt in geschlossenem Zustand mit ihrer unteren Kante von außen dichtend an einem nach oben gebogenen Teil des hinteren Bereich der Dachplatte 7 an. Sie wird durch den Unterdruck oder bei Betrieb eines im Bereich der Luftaustrittsöffnungen 22 vorgesehenen Gebläses 38 von ihrem Sitz abgehoben und lässt dadurch Luft in Richtung des Pfeils nach außen strömen. Auch die Klappe 36 kann mittels eines Motors betätigbar sein. Das Gebläse 38 kann in seiner Drehrichtung umkehrbar sein und somit wahlweise bei geöffneter Klappe 36 auch Luft in den Innenraum fördern.

Die einzelnen vorstehend beschriebenen Merkmale können beliebig kombiniert werden. So können auch Gebläse 38 bei den Ausführungsformen gemäß Fig. 1 bis 6 vorgesehen sein. Eine Verwendung von schwenkbaren Lamellen 13 ist nicht an die Ausführungsform gemäß Fig. 4 gebunden, sondern kann auch bei den übrigen Ausführungsformen zum Einsatz gelangen.

In der Formgebung der gezeigten Aufwölbungen 9, 19, 29 ist ebenfalls keine Beschränkung zu sehen. Hier können eine oder mehrere Aufwölbungen in unterschiedlichsten Formen mit oder ohne integrierte Funktionselemente vorgesehen sein. Es ist auch möglich, den von den Aufwölbungen bereitgestellten zusätzlichen Raum von der Innenseite her als Aufnahmeraum für Zusatzelemente oder als Stauraum für nützliches Zubehör beispielsweise über öffnungsfähige Klappen oder verschwenk- oder verschiebbare Abdeckungen zugänglich zu machen.

### Bezugszeichenliste

- 1: Fahrzeugdach
- 2: Frontscheibe
- 3: A-Säule
- 4: Seitenholm
- 5: B-Säule
- 6: C-Säule
- 7: Dachplatte
- 8: Randbereich (von 7)
- 9: Aufwölbung
- 10: Luftaustrittsöffnung
- 11: Luftaustrittsöffnung
- 12: Luftaustrittsöffnung
- 13: Lamelle
- 14: Drehachse
- 15: Gestänge
- 16: Anlenkpunkt
- 17: Dachplatte
- 18: Motor
- 19: Aufwölbung
- 20: Heckscheibe
- 21: Bremsleuchte
- 22: Luftaustrittsöffnung
- 23: (eingefärbte) Schicht
- 24: Abdeckung
- 25: Verkleidung
- 26: Klappe
- 27: Schwenkachse
- 28: Zahnrad
- 29: Aufwölbung
- 30: Motor
- 31: Zahnriemen
- 32: Gitter
- 36: Klappe
- 37: Schwenkachse
- 38: Gebläse

## Patentansprüche

1. Fahrzeugdach mit einer Dachplatte (7, 17) aus Kunststoff, die eine Dachfläche zwischen Seitenholmen (4) abdeckt, **dadurch gekennzeichnet, dass** die Dachplatte (7, 17) wenigstens eine integral aus dem gleichen Kunststoff geformte Aufwölbung (9, 19, 29) aufweist, wobei in wenigstens eine Aufwölbung (9, 19, 29) wenigstens ein Funktionselement (10, 11, 12, 13, 21, 22, 26, 38) integriert ist.

2. Fahrzeugdach nach Anspruch 1, **dadurch gekennzeichnet, dass** die Dachplatte (7, 17) wenigstens teilweise transparent ausgebildet ist.

3. Fahrzeugdach nach Anspruch 1 oder 2, **dadurch gekennzeichnet, dass** das Funktionselement von wenigstens einer Luftaustrittsöffnung (10, 11, 12, 22) gebildet wird.

4. Fahrzeugdach nach Anspruch 3, **dadurch gekennzeichnet, dass** die Luftaustrittsöffnung (10, 11, 12, 22) mittels eines Schließelements (13, 26, 36) verschließbar oder wenigstens teilweise freigebbar ist.

5. Fahrzeugdach nach Anspruch 4, **dadurch gekennzeichnet, dass** das Schließelement (13, 26) mittels eines Motors (18, 30) betätigbar ist.

6. Fahrzeugdach nach einem der Ansprüche 1 bis 5, **dadurch gekennzeichnet, dass** das Funktionselement von einem Gebläse (38) gebildet wird.

7. Fahrzeugdach nach einem der vorhergehenden Ansprüche, **dadurch gekennzeichnet, dass** das Funktionselement von einer Bremsleuchte (21) gebildet wird.

8. Fahrzeugdach nach einem der Ansprüche 1 bis 7, **dadurch gekennzeichnet, dass** Teilbereiche der Dachplatte (7, 17) mit einer eingefärbte Schicht (8, 23) versehen sind.

9. Fahrzeugdach nach einem der Ansprüche 3 bis 8, **dadurch gekennzeichnet, dass** die Aufwölbung (9, 19, 29) an ihrer Hinterkante eine vorstehende Abdeckung (24) aufweist.

10. Fahrzeugdach nach einem der vorhergehenden Ansprüche, **dadurch gekennzeichnet, dass** die Dachplatte (7, 17) aus einem Polycarbonat besteht.

11. Fahrzeugdach nach einem der vorhergehenden Ansprüche, **dadurch gekennzeichnet, dass** die Dachplatte (7, 17) durch ein Spritzpräge-Verfahren gefertigt ist.
